# EUROPEAN PATENT APPLICATION

(11) **EP 4 492 597 A1**
(43) Date of publication of application: **15.01.2025**
(21) Application number: 24184066.9
(22) Date of filing: 24.06.2024
(51) Int. Cl.: H02H 3/20, H01H 9/54, H02H 9/00, H02J 9/06

(54) **BYPASS LINE FOR A POWER SYSTEM AND METHOD OF OPERATING A POWER SYSTEM**

(30) Priority: 27.06.2023 US 202318214833
(71) Applicant: Schneider Electric IT Corporation, Foxboro, MA 02035 (US)
(72) Inventor: GAILLA, Charles, FOXBORO 02035 (US)
(74) Representative: Plasseraud IP

(57) **Abstract**

A power system including an input configured to receive input AC power; an output configured to provide output power to a load; an AC/DC converter coupled to the input and configured to convert the input AC power into DC power; a bypass line coupled between the input and the output and configured to provide the input AC power to the output as AC output power, the bypass line comprising a hybrid circuit breaker, the hybrid circuit breaker including: an electromechanical switch configured to open at a first switching rate, a solid-state switch rated to open at a second switching rate that is slower than the first switching rate, and a voltage suppression device; and a controller coupled to the hybrid circuit breaker.

## Description

### BACKGROUND

### Field of Invention

The present disclosure relates generally to power systems and bypass lines for power systems. More particularly, aspects of the present disclosure relate to systems and methods for providing direct current and alternating current from a power supply to a load.

### Discussion of Related Art

The use of power systems, such as uninterruptible power supplies (UPS), to provide regulated, uninterrupted power for sensitive and/or critical loads, such as computer systems and other data processing systems, is known. Known uninterruptible power supplies include on-line UPSs, off-line UPSs, line interactive UPSs, as well as others. On-line UPSs provide conditioned AC power as well as back-up AC power upon interruption of a primary source of AC power. Off-line UPSs typically do not provide conditioning of input AC power but do provide back-up AC power upon interruption of the primary AC power source. Line interactive UPSs are similar to off-line UPSs in that they switch to battery power when a blackout occurs but also typically include a multi-tap transformer for regulating the output voltage provided by the UPS. Known UPSs generate thermal losses and have slow response times.

### BRIEF DESCRIPTION OF THE DRAWINGS

Various aspects of at least one embodiment are discussed below with reference to the accompanying figures, which are not intended to be drawn to scale. The figures are included to provide illustration and a further understanding of the various aspects and embodiments, and are incorporated in and constitute a part of this specification, but are not intended as a definition of the limits of the invention. In the figures, each identical or nearly identical component that is illustrated in various figures is represented by a like numeral. For purposes of clarity, not every component may be labeled in every figure. In the figures:
FIG. 1 is a functional block diagram of a power system in accordance with aspects described herein;
FIG. 2 is a block diagram of a method in accordance with aspects described herein; and
FIG. 3 illustrates a soft starting operation of a hybrid circuit breaker of the present disclosure.

### DETAILED DESCRIPTION

Examples of the methods and systems discussed herein are not limited in application to the details of construction and the arrangement of components set forth in the following description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms. In addition, in the event of inconsistent usages of terms between this document and documents incorporated herein by reference, the term usage in the incorporated references is supplementary to that of this document; for irreconcilable inconsistencies, the term usage in this document controls.

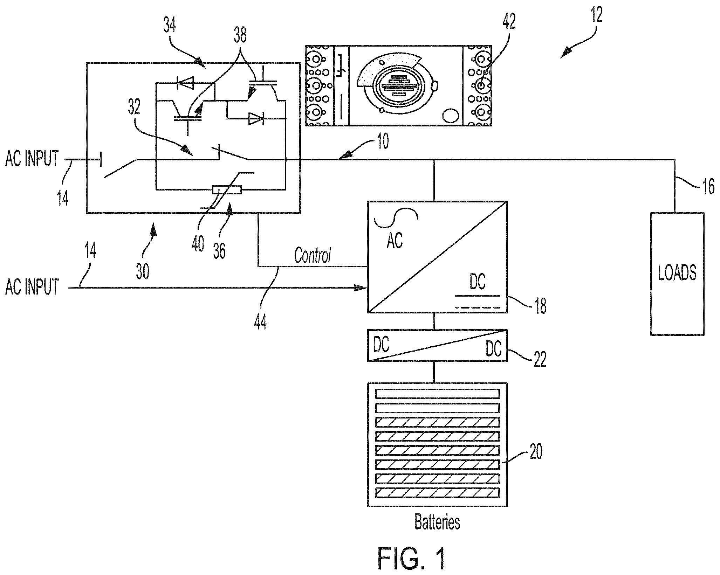

Hybrid circuit breakers of the present disclosure can provide bypass backfeed isolation with power losses lower than with a static-bypass switch. According to an aspect of the present disclosure, a bypass line 10 including a hybrid circuit breaker is incorporated in a power system. For example, the bypass line 10 of FIG. 1 may be provided as part of the power system 12 or separately from other components of a power system. The bypass line 10 may be coupled between the input of the power system 12 and the output of the power system 12. The bypass line is configured to provide input AC power to the output of the power system as unregulated AC output power.

As further shown in FIG. 1, the power system 12 is an off-line Uninterruptible Power Supply (UPS) that includes an input 14 configured to receive input AC power, an output 16 configured to provide output power to a load, an AC/DC converter 18 coupled to the input 14 and configured to convert the input AC power into DC power, a battery 20 connected to the AC/DC converter 18 by a DC/DC converter 22, and the bypass line 10 coupled between the input 14 and the output 16.

In some embodiments, the power system 12 is another type of uninterruptible power supply.

In some embodiments, the power system 12 is part of a datacenter. In some embodiments, the power system 12 includes a datacenter.

As shown in FIG. 1, the hybrid circuit breaker 30 in the bypass line 10 may be used as a switching mechanism to isolate the input 14 from the output 16. For example, in the case of an upstream short-circuit or grid loss, the hybrid circuit breaker 30 can disconnect the bypass line 10 from the electrical network. Once grid power returns, the hybrid circuit breaker 30 can ensure a safe recoupling to the network to avoid uncontrolled power flow. Additionally, the hybrid circuit breaker 30 of the present disclosure has lower power losses relative to traditional static-bypass switches that can provide isolation by using thyristors.

Referring to the embodiment of FIG. 1, the hybrid circuit breaker 30 includes an electromechanical switch 32, a solid-state switch 34 (for example, a transistor, such as an insulated-gate bipolar transistor), and a voltage suppression device 36 (for example, a metal oxide resistor). As shown in FIG. 1, the electromechanical switch 32, the solid-state switch 34, and the voltage suppression device 36 are coupled in parallel.

The electromechanical switch 32 and the solid-state switch 34 may be configured to open at different switching rates. In some embodiments, the electromechanical switch 32 is rated to open at a first switching rate, and the solid-state switch 34 is rated to open at a second switching rate that is slower than the first switching rate.

In some embodiments, the electromechanical switch is further configured to utilize the Thomson effect to achieve the first switching rate.

The electromechanical switch 32 has relatively low power losses. In addition, the electromechanical switch may include an electromagnetic repulsion-based actuation mechanism. In some embodiments, the electromagnetic repulsion-based actuation mechanism may be a moving coil actuator (voice coil), moving magnet actuator, or a Thomson coil actuator. In some embodiments, when the electromechanical switch 32 opens, it uses the Thomson effect for very fast switching. For example, electromagnetic switches utilizing a Thomson coil actuator may open in less than a millisecond.

After the electromechanical switch 32 opens, a current path is maintained from the input 14 to the output 16, through the solid-state switch 34. When sufficient time has passed such that an air gap in the electromechanical switch 32 is sufficient to avoid an arc or a spark, the solid-state switch 32 opens and residual current is absorbed by the voltage suppression device 36.

In the embodiment of FIG. 1, the solid-state switch 34 includes a least one transistor 38. In the embodiment of FIG. 1, the transistor 38 is an insulated-gate bipolar transistor (IGBT). In other embodiments, the solid-state switch may use a different type or number of transistors.

In the embodiment of FIG. 1, the voltage suppression device 36 includes at least one varistor 40. In some embodiments, the voltage suppression device includes at least one metal oxide varistor (MOV). In other embodiments, the voltage suppression device 36 can include other appropriate circuitry.

The bypass line further includes a controller 42 operatively connected to one or more other components of the bypass line. The controller 42 may be located within the hybrid circuit breaker 30, external the hybrid circuit breaker, or anywhere else within or external the power system 12.

In the embodiment of FIG. 1, the controller 42 is configured to monitor the input AC power. The controller 42 is configured to receive a signal corresponding to the input AC power. For example, the controller may be configured to receive a current measurement at the AC input and/or a voltage measurement at the AC input.

The controller 42 is configured to determine whether the input AC power is acceptable or unacceptable. Responsive to a determination that the input AC power is unacceptable, the controller 42 is configured to operate the electromechanical switch 32 and/or the solid-state switch 34. For example, responsive to a determination that the input AC power is unacceptable, the controller 42 may cause the electromechanical switch 32 to open and cause the solid-state switch 34 to close.

After a predetermined amount of time, the controller 42 is configured to open the solid-state switch 34. Upon the electromechanical switch and solid-state switch opening, the voltage suppression device is configured to absorb residual current in the bypass line.

In some embodiments, the controller 42 is configured to open the solid-state switch 34 after a predetermined period of time has elapsed since opening the electromechanical switch. In some embodiments, the predetermined time is a time sufficient to avoid arcing in the hybrid circuit breaker 30. In some embodiments, the predetermined time is less than 1 millisecond. In some embodiments, the predetermined time is about 500 microseconds. Because of the relatively fast opening time of the solid-state switch 34, the hybrid breaker of the present disclosure is suitable for use with power systems in which the input power and output power are high.

When the controller 42 determines that the AC power at the input 14 is unacceptable, the converter 18 can convert DC power from the battery 20 to AC power that is provided to the load at the output 16.

Alternatively, when the controller 42 determines that the AC power at the input 14 is acceptable, the hybrid circuit breaker 30 remains closed until the controller 42 determines that the AC power at the input 14 is unacceptable. When the AC power at the input 14 is acceptable, the AC power is provided front the input 14 to the load at the output 16, and the AC/DC converter 18 charges the battery 20 with DC power that is derived from the AC power of the input 14.

Hybrid breakers of the present disclosure allow for increased performance of power systems, such as power systems in datacenters. Hybrid breakers of the present disclosure ensure less downtime of the power system in which the hybrid breaker is used.

Hybrid breakers of the present disclosure have improved efficiency. Hybrid breakers of the present disclosure reduce energy use. Hybrid breakers of the present disclosure reduce carbon emissions because they require less power for operation. Hybrid breakers of the present disclosure have a reduced footprint relative to other breakers. Hybrid breakers of the present disclosure have simpler structure relative to other breakers.

Hybrid breakers of the present disclosure provide bypass backfeed isolation with limited power losses and/or with power losses much lower than in a static-bypass switch. Hybrid breakers of the present disclosure generate reduced thermal losses relative to other breakers.

Hybrid breakers of the present disclosure provide native protection in a power system.

As described above with respect to FIG. 1, the hybrid circuit breaker is utilized in the bypass line of an off-line UPS; however, in other embodiments, the hybrid circuit breaker can be utilized in the bypass line of another type of UPS or another type of power system. For example, in at least one embodiment, the hybrid circuit breaker is utilized in the bypass line of an on-line UPS. In such an embodiment, the hybrid circuit breaker can be used to isolate the inverter output of the UPS from main power supply when the inverter is powered on. Without such isolation, the inverter will backfeed the main power supply when the power level of the power supply drops.

In at least one embodiment, the power system 12 includes a control line 44. In one embodiment the control line 44is a communication layer between the hybrid circuit breaker 30 and the converter 18. In other embodiments, the control line 44 can allow communication between the hybrid circuit breaker 30 and other components of the power system 12. For example, in one embodiment, the control line 44 allows communication between a controller in the hybrid circuit breaker 30 (e.g., controller 42 or another controller) and a controller of the power system 12. The control line 44 can allow the hybrid circuit breaker 30 to inform the components with which it is in communication of current upstream electrical network conditions. In at least one embodiment, such information can allow the power system 12 and/or converter 18 to turn from a current source mode to a voltage source mode and so provide necessary power to the loads 16.

This control line 44 may also be used to provide network information (e.g., voltage, frequency, phase, or other properties) and information regarding the hybrid breaker (e.g., a state of health of the hybrid breaker, a default, warnings, or other information).

Another aspect of the present disclosure is directed to a method of operating a power system.

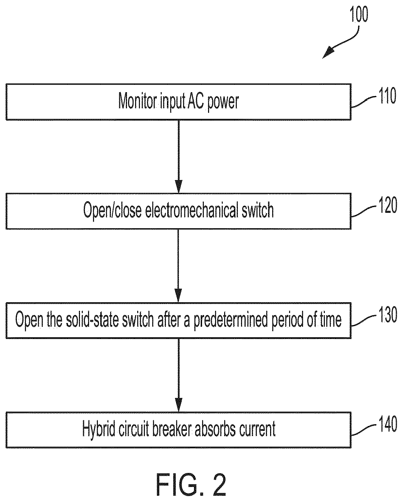

FIG. 2 shows an embodiment of a method 100 of operating a power system, such as the power system of FIG. 1, which includes the input configured to receive input AC power; the output configured to provide output power to the load; the AC/DC converter coupled to the input and configured to convert the input AC power into DC power; the bypass line coupled between the input and the output and configured to provide the input AC power to the output as AC output power, the bypass line comprising the hybrid circuit breaker 30.

In some embodiments, the electromechanical switch, solid-state switch, and voltage suppression device are coupled in parallel.

The method includes monitoring the input AC power at block 110. The controller is configured to receive a signal indicative of the input AC power and to monitor the input AC power level. The controller is configured to determine whether the input AC power is acceptable or unacceptable.

At block 120, responsive to a determination that the input AC power is unacceptable, the electromechanical switch is operated to open.

At bock 130, the method includes operating the solid-state switch to open after a predetermined period of time has elapsed since opening the electromechanical switch. In some embodiments, the predetermined period of time is a time sufficient to avoid arcing in the hybrid circuit breaker 30.

At block 140, the hybrid circuit breaker 30 absorbs residual current. The voltage suppression device of the hybrid circuit breaker 30 is configured to absorb current in the hybrid circuit breaker 30 after the solid-state switch is opened.

The method may include opening the electromechanical switch and the solid-state switch at different switching rates. In some embodiments, the electromechanical switch is rated to open at a first switching rate, and the solid-state switch is rated to open at a second switching rate that is slower than the first switching rate. In some embodiments, the method utilizes the Thomson effect in the electromechanical switch to achieve the first switching rate.

As discussed above, the hybrid circuit breaker 30 may provide downstream protection against arc flashing (in the case of low incident energy) during normal operation when there is a short circuit in the system. In addition, according to another aspect of the present disclosure, a hybrid circuit breaker 30 of the present disclosure may also be used to mitigate current inrush of loads having a capacitive profile (e.g., a load with an input capacitor) or an inductive profile (e.g. a transformer or a motor).

For example, according to an aspect of the present disclosure, a hybrid circuit breaker 30 of the present disclosure may be used as a soft starter. The hybrid breaker may be used to control current inrush for inductive loads (e.g., an inductive load of a transformer). The soft starting operation can allow a smooth ramp up of the output voltage to limit current inrush at the load and to reduce constraints required of the electrical distribution network.

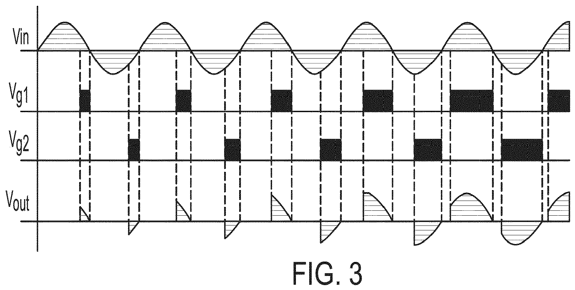

FIG. 3 illustrates one embodiment of the soft starting operation of the hybrid circuit breaker 30. The system may be configured to initiate the soft starting operation where the load includes an inductive load that may be damaged by a current inrush having an amplitude greater than a threshold current value. Soft starting includes ramping up the output voltage of the system smoothly to reduce the current inrush downstream from the hybrid circuit breaker. For example, in at least one embodiment, in a soft starting mode of operation, the electromechanical switch 32 is maintained in an open state and the transistor 34 is operated to smoothly ramp up the output voltage of the system 12. An example of operation of the system 12 in a soft starting mode of operation is shown in FIG. 3.

In FIG. 3, Vin is the line to neutral voltage input at the input 14, Vout is the line to neutral voltage output 16, Vg1 & Vg2 represent the conduction time of the transistor 34. Vg1 represents the conduction time for the positive wave of the voltage signal. Vg2 represents the conduction time for the negative wave of the voltage signal. As shown in FIG. 3, Vg1 and Vg2 functions are step functions. Initially, the duty cycle of Vg1 and Vg2 are selected such that small amplitudes of Vin pass through to Vout. Over time, the duty cycle of Vg1 and the duty cycle of Vg2 are incrementally increased. As the duty cycle of Vg1 and Vg2 increase, more of the Vin signal passes through to Vout. In this way, at the end of the soft start procedure, the duty cycle of Vg1 and the duty cycle of Vg2 are each 100% and the full periodic signal Vin passes through to Vout. At this time, the electromechanical switch 32 can be closed.

Further examples are provided in the following clauses.

Clause 1. A power system, the power system comprising:
an input configured to receive input AC power;
an output configured to provide output power to a load;
an AC/DC converter coupled to the input and configured to convert the input AC power into DC power;
a bypass line coupled between the input and the output and configured to provide the input AC power to the output as AC output power, the bypass line comprising a hybrid circuit breaker, the hybrid circuit breaker including:
   an electromechanical switch configured to open at a first switching rate,
a solid-state switch rated to open at a second switching rate that is slower than the first switching rate, and
   a voltage suppression device; and
a controller coupled to the hybrid circuit breaker.

Clause 2. The power system of clause 1, wherein the solid-state switch comprises at least one transistor.

Clause 3. The power system of clause 2, wherein the at least one transistor incudes an insulated-gate bipolar transistor.

Clause 4. The power system of clause 3, wherein the voltage suppression device includes at least one varistor.

Clause 5. The power system of clause 1, wherein the voltage suppression device includes at least one varistor.

Clause 6. The power system of clause 1, wherein the controller is configured to:
monitor the input AC power; and
responsive to a determination that the input AC power is unacceptable, operate the electromechanical switch to open and operate the solid-state switch to close.

Clause 7. The power system of clause 6, wherein the controller is further configured to:
operate the solid-state switch to open after a predetermined period of time has elapsed since opening the electromechanical switch.

Clause 8. The power system of clause 7, wherein the predetermined period of time is a time sufficient to avoid arcing in the hybrid circuit breaker.

Clause 9. The power system of clause 7, wherein upon the electromechanical switch and solid-state switch opening, the voltage suppression device is configured to absorb current in the bypass line.

Clause 10. The power system of clause 7, wherein the electromechanical switch is further configured to utilize the Thomson effect to achieve the first switching rate.

Clause 11. The power system of clause 1, wherein the electromechanical switch, solid-state switch and voltage suppression device are coupled in parallel.

Clause 12. The power system of clause 1, wherein the controller is configured to operate the hybrid circuit breaker to limit current inrush from the input to the load.

Clause 13. A bypass line for a power system coupled between an input of the power system and an output of the power system, and configured to provide input AC power to an output of the power system, the bypass line comprising:
a hybrid circuit breaker, the hybrid circuit breaker including:
an electromechanical switch configured to open at a first switching rate,
   a solid-state switch rated to open at a second switching rate that is slower than the first switching rate, and
a voltage suppression device.

Clause 14. The bypass line of clause 13, wherein the solid-state switch comprises at least one transistor.

Clause 15. The bypass line of clause 14, wherein the at least one transistor incudes an insulated-gate bipolar transistor.

Clause 16. The bypass line of clause 15, wherein the voltage suppression device includes at least one varistor.

Clause 17. The bypass line of clause 13, wherein the voltage suppression device includes at least one varistor.

Clause 18. The bypass line of clause 13, further comprising a controller configured to:
monitor the input AC power; and
responsive to a determination that the input AC power is unacceptable, operate the electromechanical switch to open and operate the solid-state switch to close.

Clause 19. The bypass line of clause 18, wherein the controller is further configured to:
operate the solid-state switch to open after a predetermined period of time has elapsed since opening the electromechanical switch.

Clause 20. The bypass line of clause 19, wherein the predetermined period of time is a time sufficient to avoid arcing in the hybrid circuit breaker.

Clause 21. The bypass line of clause 19, wherein upon the electromechanical switch and solid-state switch opening, the voltage suppression device is configured to absorb current in the bypass line.

Clause 22. The bypass line of clause 19, wherein the electromechanical switch is further configured to utilize the Thomson effect to achieve the first switching rate.

Clause 23. The bypass line of clause 13, wherein the electromechanical switch, solid-state switch and voltage suppression device are coupled in parallel.

Clause 24. A method of operating a power system, the power system comprising an input configured to receive input AC power; an output configured to provide output power to a load; an AC/DC converter coupled to the input and configured to convert the input AC power into DC power; a bypass line coupled between the input and the output and configured to provide the input AC power to the output as AC output power, the bypass line comprising a hybrid circuit breaker, the hybrid circuit breaker including: an electromechanical switch configured to open at a first rate, a solid-state switch rated to open at a second rate that is slower than the first rate, and a voltage suppression device; and a controller coupled to the hybrid circuit breaker, the method comprising:
monitoring the input AC power; and
responsive to a determination that the input AC power is unacceptable, operating the electromechanical switch to open and operating the solid-state switch to close.

Clause 25. The method of clause 24, further comprising:
operating the solid-state switch to open after a predetermined period of time has elapsed since opening the electromechanical switch.

Clause 26. The method of clause 25, wherein the predetermined period of time is a time sufficient to avoid arcing in the hybrid circuit breaker.

Clause 27. The method of clause 25, further comprising absorbing current in the hybrid circuit breaker with the voltage suppression device after the solid-state switch is opened.

Clause 28. The method of clause 25, further comprising utilizing the Thomson effect in the electromechanical switch to achieve the first switching rate.

Clause 29. The method of clause 24, wherein the electromechanical switch, solid-state switch and voltage suppression device are coupled in parallel.

Clause 30. The method of clause 24, further comprising limiting, with the hybrid circuit breaker, current inrush from the input to the load.

Having thus described several aspects of at least one embodiment of this invention, it is to be appreciated various alterations, modifications, and improvements will readily occur to those skilled in the art. Such alterations, modifications, and improvements are intended to be part of this disclosure and are intended to be within the scope of the invention. Accordingly, the foregoing description and drawings are by way of example only.

## Claims

1. A bypass line for a power system coupled between an input of the power system and an output of the power system, and configured to provide input AC power to an output of the power system, the bypass line comprising:
a hybrid circuit breaker, the hybrid circuit breaker including:
an electromechanical switch configured to open at a first switching rate,
a solid-state switch rated to open at a second switching rate that is slower than the first switching rate, and
a voltage suppression device.

2. The bypass line of claim 1, further comprising a controller configured to:
monitor the input AC power; and
responsive to a determination that the input AC power is unacceptable, operate the electromechanical switch to open and operate the solid-state switch to close.

3. The bypass line of claim 2, wherein the controller is further configured to:
operate the solid-state switch to open after a predetermined period of time has elapsed since opening the electromechanical switch.

4. The bypass line of claim 3, wherein the predetermined period of time is a time sufficient to avoid arcing in the hybrid circuit breaker.

5. The bypass line of claim 3, wherein upon the electromechanical switch and solid-state switch opening, the voltage suppression device is configured to absorb current in the bypass line.

6. The bypass line of claim 3, wherein the electromechanical switch is further configured to utilize the Thomson effect to achieve the first switching rate.

7. The bypass line of any of the preceding claims, wherein the electromechanical switch, solid-state switch and voltage suppression device are coupled in parallel.

8. The bypass line of claim 2, wherein the controller is configured to operate the hybrid circuit breaker to limit current inrush from the input to a load.

9. A method of operating a power system, the power system comprising an input configured to receive input AC power; an output configured to provide output power to a load; an AC/DC converter coupled to the input and configured to convert the input AC power into DC power; a bypass line coupled between the input and the output and configured to provide the input AC power to the output as AC output power, the bypass line comprising a hybrid circuit breaker, the hybrid circuit breaker including: an electromechanical switch configured to open at a first rate, a solid-state switch rated to open at a second rate that is slower than the first rate, and a voltage suppression device; and a controller coupled to the hybrid circuit breaker, the method comprising:
monitoring the input AC power; and
responsive to a determination that the input AC power is unacceptable, operating the electromechanical switch to open and operating the solid-state switch to close.

10. The method of claim 9, further comprising:
operating the solid-state switch to open after a predetermined period of time has elapsed since opening the electromechanical switch.

11. The method of claim 10, wherein the predetermined period of time is a time sufficient to avoid arcing in the hybrid circuit breaker.

12. The method of claim 10, further comprising absorbing current in the hybrid circuit breaker with the voltage suppression device after the solid-state switch is opened.

13. The method of claim 10, further comprising utilizing the Thomson effect in the electromechanical switch to achieve the first switching rate.

14. The method of any of the preceding claims, wherein the electromechanical switch, solid-state switch and voltage suppression device are coupled in parallel.

15. The method of any of the preceding claims, further comprising limiting, with the hybrid circuit breaker, current inrush from the input to the load.
